# EUROPÄISCHE PATENTSCHRIFT

(11) **EP 3 066 326 B1**
(45) Veröffentlichungstag und Bekanntmachung des Hinweises auf die Patenterteilung: **24.10.2018**
(21) Anmeldenummer: 14795582.7
(22) Anmeldetag: 28.10.2014
(51) Int. Cl.: F02D 41/22, F02D 41/00, F02D 41/14

(54) **VERFAHREN ZUR ERKENNUNG VON DEFEKTEN EINSPRITZDÜSEN EINES VERBRENNUNGSMOTORS**
METHOD FOR DETECTING DEFECTIVE INJECTION NOZZLES OF AN INTERNAL COMBUSTION ENGINE
PROCÉDÉ PERMETTANT D'IDENTIFIER DES INJECTEURS DÉFECTUEUX D'UN MOTEUR À COMBUSTION INTERNE

(30) Priorität: 06.11.2013 DE 102013222556
(43) Veröffentlichungstag der Anmeldung: 14.09.2016
(73) Patentinhaber: Bayerische Motoren Werke Aktiengesellschaft, 80809 München (DE)
(72) Erfinder: FESTL, Siegfried, 83607 Holzkirchen (DE); GRASREINER, Sebastian, 80469 München (DE); SHEVCHENKO, Vitaly, 81541 München (DE)
(86) Internationale Anmeldenummer: PCT/EP2014/073050
(87) Internationale Veröffentlichungsnummer: WO 2015/067500

(56) Entgegenhaltungen:
- EP-A1- 2 514 954
- WO-A1-2007/054416
- WO-A1-2014/020393
- DE-A1-102005 049 069
- DE-A1-102008 000 567
- JP-A- H10 159 634
- JP-A- 2012 127 305

## Beschreibung

Die Erfindung betrifft ein Verfahren zur Erkennung von defekten Einspritzdüsen zur Zuführung von Kraftstoff in die Brennkammern eines Verbrennungsmotors, insbesondere in einem Kraftfahrzeug, sowie eine entsprechende Motortesteinrichtung zur Erkennung von defekten Einspritzdüsen.

Bei den meisten heutigen Diagnoseverfahren ist es nicht möglich, defekte Einspritzdüsen in Verbrennungsmotoren zu identifizieren, ohne dass die Einspritzdüsen hierzu aus dem Motor ausgebaut werden müssen. Demzufolge werden bei Fehlfunktionen eines Verbrennungsmotors, welche ihre Ursache in defekten Einspritzdüsen haben könnten, diese Düsen oftmals auf Verdacht getauscht. Dies führt in vielen Fällen dazu, dass ein Fehltausch von Einspritzdüsen ohne Defekt vorgenommen wird. Als Konsequenz sind Wiederholreparaturen erforderlich. Ferner steigen die Gewährleistungskosten des Motorenherstellers aufgrund unnötiger Reparaturen.

Die Druckschrift JP H10 159634 A offenbart ein Diagnoseverfahren für ein Kraftfahrzeug, bei dem zur Ermittlung eines Ausfalls einer Einspritzdüse in einem zu diagnostizierenden Zylinder die Einspritzmenge an Kraftstoff in diesem Zylinder erhöht wird und die Einspritzmengen in den anderen Zylindern herabgesetzt werden. Der Ausfall einer Einspritzdüse wird über den Detektionswert eines Sensors festgestellt, der die Sauerstoffkonzentration erfasst.

In dem Dokument JP 2012 127305 A ist eine Vorrichtung zur Steuerung des Luft-Kraftstoff-Verhältnisses in einem Verbrennungsmotor offenbart. Dabei können fehlerhafte Einspritzdüsen über die Veränderung eines Korrekturkoeffizienten ermittelt werden, wobei die Veränderung des Korrekturkoeffizienten über die Fluktuation des Luft-Kraftstoff-Verhältnisses hin zu einem fetten und hin zu einem mageren Gemisch hervorgerufen wird.

In der Druckschrift DE 10 2008 000 567 A1 ist ein Verfahren zur Unterscheidung einer fehlerhaft erwarteten Konzentration von einer fehlerhaft erfassten Konzentration eines Abgasbestandteils eines Verbrennungsmotors beschrieben. Dabei werden Werte der Konzentration in verschiedenen Betriebspunkten des Verbrennungsmotors erfasst und über Abweichungen zwischen den erfassten und erwarteten Werten wird festgestellt, ob eine fehlerhaft erwartete oder eine fehlerhaft erfasste Konzentration des Abgasbestandteils vorliegt.

Die Druckschrift WO 2007/054416 A1 offenbart ein Verfahren zum Betreiben einer Brennkraftmaschine, in dem eine Verbrennungsaussetzrate in Abhängigkeit von mindestens einer Betriebsgröße der Brennkraftmaschine ermittelt wird und eine Temperatur im Abgastrakt der Maschine in Abhängigkeit von dieser Verbrennungsaussetzrate bestimmt wird.

In dem Dokument EP 2 514 954 A1 ist ein Diagnoseverfahren für eine Brennkraftmaschine beschrieben, bei dem das Abgas der Maschine analysiert wird und basierend darauf Fehlfunktionen ermittelt werden, welche die Maschine oder ein damit verbundenes Gerät beeinflussen.

Das Dokument DE 10 2005 049 069 A1 beschreibt ein Verfahren zum Betreiben einer Brennkraftmaschine, bei dem die ein Luft-Kraftstoff-Gemischverhältnis charakterisierende Luftzahl auf die Abweichung von einem vorgegebenen Sollwert hin überwacht wird. Dabei werden Referenzwerte der Luftzahl mit und ohne Deaktivieren der Kraftstoffeinspritzung eines Zylinders ermittelt und zur Detektion eines defekten Einspritzventils miteinander verglichen.

Aufgabe der Erfindung ist es deshalb, ein Verfahren und eine entsprechende Motortesteinrichtung zu schaffen, mit denen einfach und zuverlässig defekte Einspritzdüsen erkannt werden können, ohne die Einspritzdüsen aus dem Verbrennungsmotor auszubauen.

Diese Aufgabe wird durch das Verfahren gemäß Patentanspruch 1 bzw. die Motortesteinrichtung gemäß Patentanspruch 13 gelöst. Weiterbildungen der Erfindung sind in den abhängigen Ansprüchen definiert.

Im Rahmen der Durchführung des erfindungsgemäßen Verfahrens wird der Verbrennungsmotor im Leerlauf mit einer gegenüber dem Leerlaufnormalbetrieb erhöhten Leerlaufdrehzahl betrieben. Vorzugsweise liegt diese Drehzahl bei 1000 Umdrehungen pro Minute oder höher, insbesondere bei 1150 Umdrehungen pro Minute oder höher. Auf diese Weise wird ein stabiler Betrieb des Verbrennungsmotors bei Durchführung des Verfahrens gewährleistet. Vorzugsweise wird bei der Durchführung des erfindungsgemäßen Verfahrens auch der Einspritzdruck der Einspritzdüsen auf einen vorbestimmen Wert (insbesondere 150 bar) eingestellt. Ferner ist während des Verfahrens die Gemischregelung des Verbrennungsmotors deaktiviert. Über diese Regelung wird das Gemisch aus Kraftstoff und Luft in den jeweiligen Brennkammern im Normalbetrieb des Verbrennungsmotors eingeregelt. Die Einstellung des Gemischs bei aktivierter Gemischregelung erfolgt dabei basierend auf einem Kennwert, der vom Verhältnis von Luft zu Kraftstoff im Gemisch abhängt und vorzugsweise bei einem höheren Anteil an Luft im Gemisch zunimmt. Der Kennwert wird für eine oder mehrere Einspritzgruppen aus mehreren Einspritzdüsen des Verbrennungsmotors jeweils für alle Einspritzdüsen der entsprechenden Einspritzgruppe gemeinsam gemessen. Über die gemeinsame Messung des Kennwerts für alle Einspritzdüsen einer jeweiligen Einspritzgruppe wird ein mittlerer Kennwert für das Gemisch bei der Verbrennung in den Brennkammern erfasst, in welche die Einspritzdüsen der entsprechenden Einspritzgruppe einspritzen. Vorzugsweise ist der Kennwert der an sich bekannte Lambda-Wert, der das Verhältnis von Luft zu Kraftstoff des Gemischs im Vergleich zu einem stöchiometrischen Gemisch repräsentiert und auf den üblicherweise bei der Gemischregelung zurückgegriffen wird. Der Lambda-Wert wird in der Regel über eine Lambda-Sonde ermittelt, die z.B. in einer gemeinsamen Abgasleitung der Brennkammern angeordnet ist, in welche die Einspritzdüsen der entsprechenden Einspritzgruppe einspritzen. Die Lambda-Sonde misst dort den Restsauerstoffgehalt im Abgas.

Im Rahmen des erfindungsgemäßen Verfahrens werden für zumindest einen Teil der Einspritzgruppen und insbesondere für alle Einspritzgruppen des Verbrennungsmotors bei aktivierter Messung des Kennwerts jeweils die nachfolgend erläuterten Schritte a) bis c) durchgeführt. Obwohl diese Schritte bei deaktivierter Gemischregelung durchgeführt werden, findet die Messung des Kennwerts weiterhin statt. Ferner ist zu beachten, dass die Bezeichnung der Schritte mit den Buchstaben a) bis c) lediglich zur besseren Referenzierung entsprechender Merkmale der Schritte dient, ohne dass hierdurch zwangsläufig eine zeitliche Reihenfolge zur Durchführung der Schritte festgelegt wird.

In einem Schritt a) des Verfahrens wird jede Einspritzdüse der jeweiligen Einspritzgruppe selektiv abgeschaltet, was hier und im Folgenden bedeutet, dass zu einem jeweiligen Zeitpunkt bzw. in einem jeweiligen Zeitintervall nur die Einspritzung von einer einzelnen Einspritzdüse abgeschaltet wird. Dabei wird die Veränderung des Kennwerts bei Abschaltung der jeweiligen Einspritzdüse erfasst. Vorzugsweise werden die Einspritzdüsen einer jeweiligen Einspritzgruppe direkt hintereinander abgeschaltet, um Fluktuationen bei der Messung des Kennwerts zu vermeiden. Zur Erfassung der Veränderung des Kennwerts werden der Kennwert bei Abschaltung der jeweiligen Einspritzdüse und der Kennwert vor Abschaltung der jeweiligen Einspritzdüse (d.h. bei allen eingeschalteten Einspritzdüsen der jeweiligen Einspritzgruppe) gemessen. Die Veränderung des Kennwerts stellt die Differenz (z.B. die betragsmäßige Differenz) dieser Kennwerte dar.

In einem Schritt b) des erfindungsgemäßen Verfahrens wird ein Fehlerkriterium überprüft, welches dann erfüllt ist, wenn die Veränderung des Kennwerts für die jeweilige abgeschaltete Einspritzdüse ein vorbestimmtes Maß überschreitet oder unterschreitet. Vorzugsweise wird das Fehlerkriterium im Hinblick auf ein Überschreiten des vorbestimmten Maßes überprüft. In diesem Fall können die besonders relevanten Fehlerfälle von Einspritzdüsen erfasst werden, die gegenüber ihrer technischen Spezifizierung zu viel Kraftstoff in die entsprechende Brennkammer einspritzen. Nichtsdestotrotz können mit einem Fehlerkriterium basierend auf dem Unterschreiten eines vorbestimmten Maßes gegebenenfalls auch defekte Einspritzdüsen erfasst werden, die gegenüber ihrer technischen Spezifizierung zu wenig Kraftstoff in die Brennkammer einspritzen. In einem Schritt c) des Verfahrens wird schließlich im Falle der Erfüllung des Fehlerkriteriums ein Defekt der jeweiligen (abgeschalteten) Einspritzdüse detektiert.

Das in Schritt b) überprüfte Fehlerkriterium kann unterschiedlich ausgestaltet sein. Gegebenenfalls kann das vorbestimmte Maß ein vorgegebener Wert der Veränderung des Kennwerts sein, bei dessen Überschreiten oder Unterschreiten das Fehlerkriterium erfüllt ist. Erfindungsgemäß ist das vorbestimmte Maß jedoch ein relatives Maß unter Einbeziehung der Kennwerte bei der Abschaltung der anderen Einspritzdüsen der Einspritzgruppen. Mit anderen Worten ist in diesem Fall das Fehlerkriterium in Schritt b) dann erfüllt, wenn die Veränderung des Kennwerts für die jeweilige abgeschaltete Einspritzdüse relativ zu der Veränderung des Kennwerts bei der Abschaltung der anderen Einspritzdüsen der jeweiligen Einspritzgruppe ein vorbestimmtes Maß überschreitet oder unterschreitet. Durch dieses relative Maß kann sehr effizient ein anormales Verhalten einer Einspritzdüse im Vergleich zu den anderen Einspritzdüsen der Einspritzgruppe und damit ein Defekt detektiert werden.

Dem erfindungsgemäßen Verfahren liegt die Erkenntnis zugrunde, dass eine größere bzw. kleinere Veränderung eines vom Gemischverhältnis abhängigen Kennwerts bei Abschaltung einer jeweiligen Einspritzdüse auf einen anormalen Betrieb der Einspritzdüse in der entsprechenden Einspritzgruppe schließen lässt, so dass hierüber ein Defekt der abgeschalteten Einspritzdüse detektiert werden kann.

Das erfindungsgemäße Verfahren wird vorzugsweise für den Verbrennungsmotor eines Kraftfahrzeugs verwendet, kann ggf. jedoch auch für andere Verbrennungsmotoren eingesetzt werden, wie z.B. Schiffsmotoren, Kraftwerksmotoren, Prüfstandsmotoren und dergleichen. Mit dem erfindungsgemäßen Verfahren können verschiedenste Defekte von Einspritzdüsen erfasst werden. Insbesondere eignet sich das Verfahren für Einspritzdüsen in der Form von Hochdruckinjektoren, vorzugsweise von Piezoinjektoren, in einem direkt einspritzenden Verbrennungsmotor und insbesondere in einem Ottomotor. Grundsätzlich können mit dem erfindungsgemäßen Verfahren alle Defekte von Einspritzdüsen detektiert werden, die eine Mengenabweichung des zugeführten Kraftstoffs bedingen, wie z.B. Undichtigkeiten in den Einspritzdüsen. Ferner kann das Verfahren auch zur Detektion von Defekten von nicht direkt in die Brennkammer einspritzenden Einspritzdüsen verwendet werden.

In einer besonders bevorzugten Ausführungsform wird der Verbrennungsmotor vor dem selektiven Abschalten der Einspritzdüsen solange betrieben, bis ein Aufheizen einer oder mehrerer Katalysatoren zur Abgasreinigung des Verbrennungsmotors beendet ist. Hierdurch wird eine korrekte Messung der Kennwerte sichergestellt.

In einer weiteren bevorzugten Ausführungsform wird der Verbrennungsmotor bei Durchführung des Verfahrens im Leerlauf unter Aufschaltung einer erhöhten Last betrieben, wobei die Last insbesondere durch Aktivierung von einem oder mehreren elektrischen Verbrauchern eines Kraftfahrzeugs aufgeschaltet wird, die der Verbrennungsmotor antreibt. Durch die Aufschaltung der Last wird eine stabile Drehzahl des Motors mit geringen Fluktuationen erreicht.

In einer weiteren Ausgestaltung des erfindungsgemäßen Verfahrens ist das vorbestimmte Maß durch einen Grenzwert oberhalb von 100% gegeben, wobei das Fehlerkriterium dann erfüllt ist, wenn der prozentuelle Wert der Veränderung des Kennwerts für die jeweilige abgeschaltete Einspritzdüse in Bezug auf die aufgetretene geringste Veränderung des Kennwerts bei der Abschaltung der jeweiligen Einspritzdüsen der jeweiligen Einspritzgruppe den Grenzwert überschreitet. Hierdurch können effizient defekte, fett laufende Einspritzdüsen detektiert werden, die gegenüber ihrer Spezifikation zu viel Kraftstoff einspritzen.

Zur Detektion von defekten, mager laufenden Einspritzdüsen, die gegenüber ihrer Spezifikation zu wenig Kraftstoff einspritzen, ist das vorbestimmte Maß vorzugsweise durch einen Grenzwert unterhalb von 100% gegeben, wobei das Fehlerkriterium dann erfüllt ist, wenn der prozentuelle Wert der Veränderung des Kennwerts für die jeweilige abgeschaltete Einspritzdüse in Bezug auf die aufgetretene größte Veränderung des Kennwerts bei der Abschaltung der jeweiligen Einspritzdüsen der jeweiligen Einspritzgruppe den Grenzwert unterschreitet.

In einer weiteren Variante des erfindungsgemäßen Verfahrens ist das vorbestimmte Maß durch einen Schwellwert gegeben, wobei das Fehlerkriterium dann erfüllt ist, wenn die Veränderung des Kennwerts für die jeweilige abgeschaltete Einspritzdüse abzüglich der Veränderungen des Kennwerts beim Abschalten der anderen Einspritzdüsen der jeweiligen Einspritzgruppe den Schwellwert überschreitet (bei fett laufenden defekten Einspritzdüsen) oder unterschreitet (bei mager laufenden defekten Einspritzdüsen).

In einer weiteren, bevorzugten Variante ist der oben beschriebene Grenzwert bzw. der oben beschriebene Schwellwert von einem gemessenen Kennwert bei allen angeschalteten Einspritzdüsen der jeweiligen Einspritzgruppe abhängig. Dieser gemessene Kennwert wird in der Regel unmittelbar vor dem selektiven Abschalten der Einspritzdüsen ermittelt und zur Bestimmung der Veränderung des Kennwerts herangezogen. Vorzugsweise steigt der Grenzwert oder der Schwellwert bei steigenden gemessenen Kennwerten monoton an und nimmt dabei zumindest in einem Teilintervall der gemessenen Kennwerte auch zu Monoton ansteigend bedeutet dabei, dass der Grenzwert bzw. Schwellwert in bestimmten Intervallen der Kennwerte auch konstant bleiben kann, jedoch niemals abnimmt. Diese Variante wird insbesondere zur Detektion von defekten, fett laufenden Einspritzdüsen verwendet, sofern der Kennwert bei einem höheren Anteil an Luft im Gemisch ansteigt. Man berücksichtigt dabei, dass bei höheren Kennwerten und damit mageren Gemischen im Normalbetrieb des Verbrennungsmotors eine Anfettung (Erhöhung der zugemengten Kraftstoffmasse) des Gemisches durch die Gemischregelung erfolgt, so dass es mit einer geringeren Wahrscheinlichkeit zu Zündaussetzern und damit einem fehlerhaften Motorbetrieb kommt. Gegebenenfalls kann der Grenzwert bzw. Schwellwert bei steigenden gemessenen Kennwerten auch monoton fallen und dabei zumindest in einem Teilintervall der gemessenen Kennwerte auch abnehmen. Monoton fallend bedeutet dabei, dass der Grenzwert bzw. Schwellwert in bestimmten Intervallen der Kennwerte gegebenenfalls auch konstant sein kann, jedoch niemals zunimmt. Diese Variante wird insbesondere zur Detektion von defekten, mager laufenden Einspritzdüsen eingesetzt, sofern der Kennwert bei einem höheren Anteil an Luft im Gemisch ansteigt.

In einer besonders bevorzugten Variante wird das erfindungsgemäße Verfahren im Kaltbetrieb der Einspritzdüsen durchgeführt. Dabei können effizient solche Defekte von Einspritzdüsen detektiert werden, welche nur im Kaltbetrieb auftreten, wie z.B. eine temperaturabhängige Mengenabweichung von über die Einspritzdüsen zugeführtem Kraftstoff. Um sicherzustellen, dass das Verfahren auch tatsächlich im Kaltbetrieb abläuft, wird in einer bevorzugten Variante das Ergebnis des Verfahrens oder Teilergebnisse des Verfahrens als ungültig eingestuft, wenn ein Kaltbetrieb während der Durchführung des Verfahrens nicht durchgehend vorliegt. Hierdurch wird sichergestellt, dass zuverlässig nur im Kaltbetrieb auftretende Defekte erkannt werden. Ein Kaltbetrieb der Einspritzdüsen wird vorzugsweise dann festgestellt, wenn eine Einspritzdüsentemperatur unterhalb einer vorbestimmten Schwelle, insbesondere unter 50°C liegt. Die Einspritzdüsentemperatur wird dabei vorzugsweise aus der Temperatur des Verbrennungsmotors zu Beginn des Verfahrens und der Zeitspanne bis zur Beendigung des Verfahrens geschätzt. Insbesondere kann diese Schätzung dabei auf Iso-Kennlinien mit konstanter Einspritzdüsentemperatur beruhen, die in einem Diagramm in Abhängigkeit von der Temperatur des Verbrennungsmotors zu Beginn des Verfahrens und der Zeitspanne bis zur Beendigung des Verfahrens wiedergegeben sind. Aus einer entsprechenden Verbrennungsmotortemperatur und einer Zeitspanne ergibt sich ein Punkt in dem Diagramm, der auf einer der Iso-Kennlinien liegt und somit die Einspritzdüsentemperatur spezifiziert.

Das erfindungsgemäße Verfahren kann auch im Heißbetrieb der Einspritzdüsen durchgeführt werden. Ein Heißbetrieb wird dabei insbesondere dann festgestellt, wenn kein Kaltbetrieb festgestellt wird, wobei der Kaltbetrieb basierend auf der oben beschriebenen Variante detektiert werden kann. Alternativ oder zusätzlich kann ein Heißbetrieb dann festgestellt werden, wenn die Temperatur des Kühlmittels des Verbrennungsmotors einen vorbestimmten Wert (z.B. 90 °C) überschreitet und/oder die Fahrzeit eines Kraftfahrzeugs, in dem der Verbrennungsmotor verbaut ist, unmittelbar vor Beginn des Verfahrens eine vorbestimmte Zeitspanne (z.B. 30 min) überschreitet.

Das erfindungsgemäße Verfahren kann z.B. zunächst im Heißbetrieb der Einspritzdüsen durchgeführt werden, wobei anschließend im Kaltbetrieb die Schritte a) bis c) des Verfahrens nur für Einspritzdüsen durchgeführt werden, für welche im Heißbetrieb kein Defekt festgestellt wurde.

Das erfindungsgemäße Verfahren läuft beispielsweise auf einem fahrzeugexternen Motortestgerät ab, welches z.B. in einer Fahrzeug-Reparaturwerkstatt verwendet wird. Das Motortestgerät wird über eine entsprechende Fahrzeugschnittstelle mit der Motorsteuerung des Fahrzeugs drahtlos oder drahtgebunden verbunden und kann darüber den Betrieb des Fahrzeugs steuern und Messwerte von der Motorsteuerung abrufen. Es wäre aber auch denkbar, dass das Verfahren auf dem Motorsteuergerät des Fahrzeugs abläuft.

Neben dem oben beschriebenen Verfahren betrifft die Erfindung ferner eine Motortesteinrichtung zur Erkennung von defekten Einspritzdüsen zur Zuführung von Kraftstoff in die Brennkammern eines Verbrennungsmotors. Die Motortesteinrichtung ist zur Durchführung des erfindungsgemäßen Verfahrens bzw. einer oder mehrerer bevorzugter Varianten des erfindungsgemäßen Verfahrens eingerichtet. Die Motortesteinrichtung kann z.B. das bereits oben beschriebene externe Motortestgerät sein bzw. gegebenenfalls auch im Kraftfahrzeug integriert sein.

Die Erfindung betrifft ferner ein Kraftfahrzeug mit Verbrennungsmotor und Einspritzdüsen zur Zuführung von Kraftstoff in die Brennkammern des Verbrennungsmotors, wobei das Kraftfahrzeug die oben beschriebene Motortesteinrichtung umfasst.

Ausführungsbeispiele der Erfindung werden nachfolgend anhand der beigefügten Figuren detailliert beschrieben.

Es zeigen:
- Fig. 1: ein Flussdiagramm, welches die wesentlichen Schritte einer Ausführungsform des erfindungsgemäßen Verfahrens darstellt;
- Fig. 2: ein Diagramm, welches die Detektion einer fehlerhaften Einspritzdüse in einem Verbrennungsmotor mit sechs Zylindern basierend auf einer Variante des erfindungsgemäßen Verfahrens verdeutlicht; und
- Fig. 3: ein Diagramm, welche die Abhängigkeit eines Grenzwerts zur Bestimmung von fehlerhaften Einspritzdüsen von dem gemessenen Lambda-Wert gemäß einer Ausführungsform der Erfindung wiedergibt.

Nachfolgend wird ein Ausführungsbeispiel der Erfindung basierend auf der Detektion von Einspritzdüsen in der Form von Hochdruckinjektoren beschrieben, welche direkt Kraftstoff in die Brennkammern der Zylinder eines Kraftfahrzeugmotors einspritzen. Die Injektoren sind dabei Piezoinjektoren, deren Injektordüsen sich durch Anlegen von elektrischer Spannung an ein Piezomaterial im Injektor öffnen. Die Injektoren umfassen ferner einen Temperaturkompensator mit einem Ölreservoir, wobei unterschiedliche Ausdehnungen des Gehäuses des Injektors und des Piezomaterials durch diesen Temperaturkompensator über dessen Öl ausgeglichen werden. Dabei kann es zu einem Defekt des Injektors dahingehend kommen, dass das Öl vergelt, was zur Folge hat, dass die unterschiedliche Ausdehnung von Injektorgehäuse und Piezomaterial nicht mehr ausgeglichen werden kann, was wiederum bei kalten Umgebungsbedingungen zu einem fett laufenden Injektor führt, der zu viel Kraftstoff in die Brennkammer einspritzt. Generell kann man bei fehlender Temperaturkompensation auch von Mengenabweichungen des Injektors gegenüber seiner Spezifikation ausgehen.

Hierbei ist zu beachten, dass der Defekt des fett laufenden Injektors wegen Vergelung nur bei niedrigen Temperaturen des Motors bzw. des Injektors auftritt. Mit anderen Worten kann dieser Defekt der Vergelung somit nur im Kaltbetrieb des Motors bzw. Injektors detektiert werden. Demzufolge wird die nachfolgend beschriebene Ausführungsform im Kaltbetrieb durchgeführt, um diese Defekte zu erfassen. Unabhängig hiervon werden im Kaltbetrieb jedoch auch andere Defekte des Injektors detektiert, die sowohl im Kaltbetrieb als auch im Heißbetrieb des Motors auftreten, wie z.B. eine Undichtigkeit des Injektors (beispielsweise eine Leckage an dessen Spitze). Gegebenenfalls kann das nachfolgend beschriebene Verfahren auch analog im Heißbetrieb des Motors bzw. Injektors durchgeführt werden, wobei in diesem Fall jedoch Defekte aufgrund eines Fehlverhaltens des Temperaturkompensators im Kaltzustand nicht erfasst werden. Wie bereits oben erwähnt, kann der Kaltbetrieb des Motors bzw. der Injektoren z.B. basierend auf der Motortemperatur bei Start des Testverfahrens und der Zeitspanne bis zur Beendigung des Verfahrens detektiert werden, wobei das Verfahren dann beendet ist, wenn für alle Injektoren des Verbrennungsmotors ein Lambda-Sprung bei deren Abschaltung ermittelt wurde, wie weiter unten näher beschrieben wird.

In Abhängigkeit von der Motortemperatur zum Start des Verfahrens und der Zeitdauer des Verfahrens sind in einer bevorzugten Variante empirisch ermittelte Kennlinien festgelegt, wobei jede Kennlinie einer festen Injektortemperatur zugeordnet ist. Es wird dabei bestimmt, zu welcher Kennlinie eine bestimmte Motortemperatur beim Start des Verfahrens und eine Zeitspanne bis zur Beendigung des Verfahrens gehört. Da zu jeder Kennlinie eine Injektortemperatur gehört, ergibt sich hieraus eine geschätzte Injektortemperatur. Wenn diese geschätzte Injektortemperatur unterhalb eines bestimmten Schwellwerts, z.B. unterhalb von 50°C, liegt, wird ein Kaltbetrieb festgestellt. Sollte sich demgegenüber bei der Beendigung des Verfahrens eine Temperatur der Injektoren über dem Schwellwert ergeben, wird das Ergebnis des Verfahrens verworfen oder als Heißtest interpretiert, da dann nicht mehr sichergestellt ist, dass nur bei Kaltbetrieb auftretende Injektordefekte zuverlässig erkannt wurden.

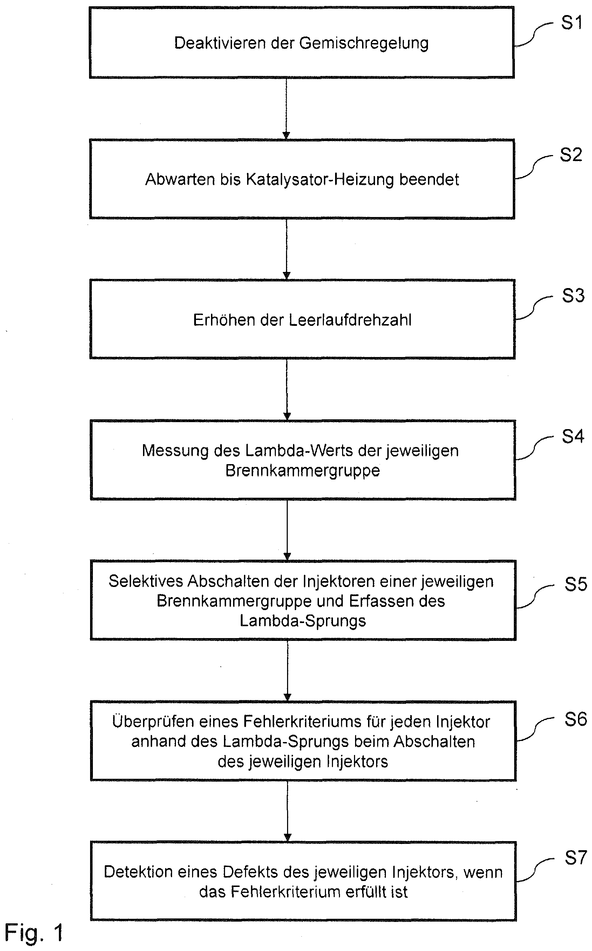

Anhand von Fig. 1 wird die Durchführung einer Variante des erfindungsgemäßen Verfahrens erläutert. Das nachfolgend beschriebene Testverfahren wird dabei über ein Motortestgerät durchgeführt, welches über eine Fahrzeugschnittstelle mit der Motorsteuerung verbunden ist und hierüber den Betrieb des Fahrzeugs steuern kann bzw. Messwerte von der Motorsteuerung abrufen kann. Das Testverfahren wird anhand der Überprüfung von Injektoren in einem Sechs-Zylinder-Verbrennungsmotor mit sechs Brennkammern erläutert, wobei jede Brennkammer einen einzelnen Injektor zur Kraftstoffeinspritzung umfasst und zwei Brennkammergruppen aus jeweils drei Brennkammern und damit drei Injektoren existieren. Für jede Brennkammergruppe wird mittels einer einzelnen Lambda-Sonde, die in einem gemeinsamen Abgasrohr für die drei Brennkammern angeordnet ist, der bereits oben beschriebene Lambda-Wert ermittelt wird, der das Verhältnis von Luft zu Kraftstoff des Gemischs in den Brennkammern im Vergleich zu einem stöchiometrischen Gemisch repräsentiert. Wie allgemein bekannt, entspricht ein Lambda-Wert von 1 dem stöchiometrischen Gemisch, wohingegen Lambda-Werte größer 1 magere Gemische mit einem höheren Anteil an Luft bei der Verbrennung und Lambda-Werte kleiner 1 fette Gemische mit einem geringeren Anteil an Luft bei der Verbrennung repräsentieren. Der über die entsprechende Lambda-Sonde ermittelte Lambda-Wert wird im Normalbetrieb des Verbrennungsmotors zu Gemischregelung verwendet. Im Rahmen des erfindungsgemäßen Testverfahrens ist zwar die Gemischregelung deaktiviert, jedoch werden weiterhin entsprechende Messungen von Lambda-Werten durch die Lambda-Sonden durchgeführt, um hierüber defekte Injektoren zu detektieren.

Obwohl das Verfahren der Erfindung anhand eines Sechs-Zylinder-Motors erläutert wird, kann das Verfahren in gleicher Weise auch für Verbrennungsmotoren mit einer anderen Anzahl von Zylindern eingesetzt werden, sofern über eine jeweilige Lambda-Sonde der Lambda-Wert für mehrere Einspritzdüsen bzw. Brennkammern erfasst wird. Beispielsweise kann das Verfahren auch für einen Vier-Zylinder-Motor verwendet werden, bei dem eine jeweilige Lambda-Sonde für zwei Zylinder vorgesehen ist. Ebenso kann das Verfahren für einen Acht-Zylinder-Motor zum Einsatz kommen, bei dem der Lambda-Wert jeweils für eine Brennkammergruppe aus vier Zylindern mittels einer Lambda-Sonde erfasst wird.

Zu Beginn des Verfahrens wird nach Start des Verbrennungsmotors zunächst dessen Gemischregelung in Schritt S1 der Fig. 1 deaktiviert. Um unverfälschte Messungen zu halten, wird in einem Schritt S2 gewartet, bis das Aufheizen des Katalysators des Verbrennungsmotors beendet ist. Im Schritt S3 wird schließlich die Drehzahl des Verbrennungsmotors, der zunächst bei Leerlaufnormaldrehzahl läuft, erhöht, um eine stabile Drehzahl beim Test der Injektoren des Verbrennungsmotors zu gewährleisten. Insbesondere wird die Drehzahl auf einen Drehzahlwert von 1200 Umdrehungen pro Minute oder höher eingestellt. Vorzugsweise wird in Schritt S3 auch der Einspritzdruck der Injektoren auf einen vorbestimmten Wert (z.B. 150 bar) eingestellt. In einem nachgeschalteten optionalen Schritt, der nicht in Fig. 1 wiedergegeben ist, erfolgt eine Lastaufschaltung auf den Verbrennungsmotor, wodurch Fluktuationen in der Leerlaufdrehzahl, die bei niedriger Last und bei Gemischabweichungen vom Sollzustand auftreten können, vermieden werden. Zur somit indirekten elektrischen Lastaufschaltung werden ein oder mehrere elektrische Verbraucher im Fahrzeug aktiviert, wie z.B. die Klimaanlage, die Heckscheibenheizung, der Elektrolüfter des Kühlers und dergleichen.

In den nachfolgenden Schritten S4 bis S7 erfolgt die eigentliche Durchführung des Testverfahrens, wobei diese Schritte für jede der beiden Brennkammergruppen in separaten Zeitintervallen durchgeführt werden. In Schritt S4 wird zunächst der Lambda-Wert der jeweiligen Brennkammergruppe über die der Brennkammergruppe zugeordnete Lambda-Sonde gemessen. Anschließend werden in einem Schritt S5 selektiv die einzelnen Injektoren der Brennkammergruppe abgeschaltet und für jeden abgeschalteten Injektor der sich hieraus ergebender Lambda-Sprung ermittelt, wobei die Injektoren einer Brennkammergruppe direkt hintereinander abgeschaltet werden, um Fluktuationen im Lambda-Wert zu vermeiden. Es wird somit der Lambda-Wert beim Abschalten des jeweiligen Injektors gemessen und von diesem Messwert wird der Lambda-Wert abgezogen, der in Schritt S4 ermittelt wurde. Da das Abschalten der jeweiligen Injektoren zu einer Erhöhung des Luftanteils bei der Verbrennung führt, nimmt der Lambda-Wert beim Abschalten der Injektoren zu, d.h. der Lambda-Sprung ist positiv. Nach der Ermittlung der Lambda-Sprünge der jeweiligen abgeschalteten Injektoren wird schließlich in Schritt S6 ein Fehlerkriterium für jeden Injektor anhand des Lambda-Sprungs überprüft, der sich beim Abschalten des jeweiligen Injektors ergeben hat. Schließlich wird in Schritt S7 ein Defekt des jeweiligen Injektors detektiert, sofern das Fehlerkriterium erfüllt ist.

Wie weiter unten noch näher erläutert, ist das Fehlerkriterium derart ausgestaltet, dass bei einem größeren Lambda-Sprung beim Abschalten des entsprechenden Injektors im Vergleich zu den anderen Injektoren ein Defekt festgestellt wird. Dabei ist zu berücksichtigen, dass die hier beschriebene Ausführungsform des Verfahrens zur Detektion von fett abweichend laufenden Injektoren dient, die im Kaltbetrieb zu viel Kraftstoff abspritzen. Solche Injektoren führen bei der Fahrt des Kraftfahrzeugs mit kaltem Motor zu einem zu fetten Kraftstoffgemisch, woraufhin die Gemischregelung einen zu niedrigen Lambda-Wert über die Lambda-Sonde misst und daraufhin die Einspritzung aller Injektoren der entsprechenden Brennkammergruppe verringert, was wiederum zu Zündaussetzern von solchen Injektoren der Brennkammergruppe führt, die nicht fett laufen und in Ordnung sind. Herkömmlicherweise führt dies dazu, dass beim Auftreten von Zündaussetzern die falschen Injektoren ausgetauscht werden. Im Unterschied hierzu wird mit dem hier beschriebenen Testverfahren der fett laufende Injektor detektiert, der Ursache für Zündaussetzer im Kaltbetrieb sein kann.

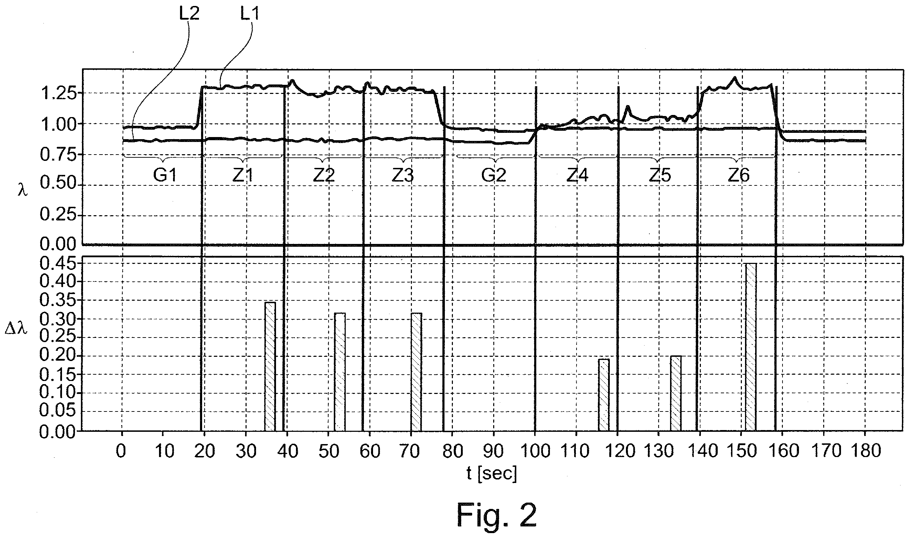

Das erfindungsgemäße Testverfahren sowie das oben beschriebene Fehlerkriterium werden nachfolgend nochmals im Detail anhand von Fig. 2 erläutert. Diese Figur zeigt ein Zeitdiagramm mit der Zeit t als Abszisse, wobei im oberen Teil des Diagramms entlang der Ordinate die ermittelten Lambda-Werte A dargestellt sind und im unteren Teil des Diagramms entlang der Ordinate die entsprechenden Lambda-Sprünge Δλ wiedergegeben sind. Die Bezugszeichen G1 und G2 bezeichnen die beiden Brennkammergruppen des betrachteten Sechs-Zylinder-Motors. Die Brennkammergruppe G1 umfasst dabei die drei Zylinder bzw. Brennkammern Z1, Z2 und Z3, wohingegen die Brennkammergruppe G2 die drei Zylinder bzw. Brennkammern Z4, Z5 und Z6 umfasst. Gemäß Fig. 2 entsprechen diese Bezugszeichen auch Zeitintervallen, in denen Messungen für die einzelnen Brennkammern bzw. Brennkammergruppen durchgeführt werden. Im Rahmen des Verfahrens der Fig. 2 werden zunächst die Lambda-Sprünge Δλ für die Brennkammergruppe G1 und anschließend für die Brennkammergruppe G2 ermittelt. Die Linie L1 repräsentiert dabei die gemessenen Lambda-Werte für die Brennkammergruppe G1 und Linie L2 die gemessenen Lambda-Werte für die Brennkammergruppe G2. In dem betrachteten Verbrennungsmotor sind die Injektoren der Zylinder Z1 bis Z5 in Ordnung, wohingegen der Injektor des Zylinders Z6 ein defekter Injektor ist, der im betrachteten, Kaltbetrieb zu fett läuft und damit zu viel Kraftstoff einspritzt.

Zunächst wird in dem Zeitintervall G1 der Lambda-Wert über die entsprechende Lambda-Sonde der Brennkammergruppe G1 bei allen angeschalteten Injektoren der Zylinder Z1 bis Z3 ermittelt. Das Zeitintervall G1 liegt bei etwa 20 sec, wobei innerhalb dieses Zeitintervalls gemessene Lambda-Werte gemittelt werden. Anschließend werden analog zu dem Zeitintervall G1 in entsprechenden Zeitintervallen Z1 bis Z3 Lambda-Werte ermittelt, wobei diese Zeitintervalle auch im Bereich von 20 sec liegen. Im Zeitintervall Z1 ist dabei der Injektor des Zylinders Z1 ausgeschaltet, im Zeitintervall Z2 der Injektor des Zylinders Z2 und im Zeitintervall Z3 der Injektor des Zylinders Z3. Aufgrund des Abschaltens der jeweiligen Injektoren führt dies zu einer Erhöhung des Lambda-Werts von etwa 1,0 auf 1,25, wie durch die Linie L1 angedeutet ist. Für die einzelnen abgeschalteten Injektoren wird ferner der Lambda-Sprung Δλ bestimmt, wie im unteren Teil des Diagramms angedeutet ist. Da alle Injektoren in Ordnung sind und im Wesentlichen die gleiche Menge an Kraftstoff einspritzen, sind die Lambda-Sprünge in etwa gleich groß und liegen im Bereich zwischen 0,30 und 0,35.

Die oben beschriebenen Messungen werden analog für die zweite Brennkammergruppe G2 wiederholt, wobei wiederum zunächst der Lambda-Wert bei allen angeschalteten Injektoren der Zylinder Z4 bis Z6 im Zeitintervall G2 gemessen wird und schließlich sukzessive die einzelnen Injektoren der Zylinder Z4 bis Z6 abgeschaltet werden, um die daraus resultierenden Lambda-Sprünge zu bestimmen. Da der Injektor des Zylinders Z6 zu fett läuft, ist der Lambda-Wert, der im Zeitintervall G2 ermittelt wird, kleiner als der Lambda-Wert in entsprechenden Zeitintervallen G1. Insbesondere liegt der Wert im Zeitintervall G2 bei etwa 0,80. Da der Injektor des Zylinders Z6 im Vergleich zu den Injektoren der Zylinder Z4 und Z5 den meisten Kraftstoff zuführt, führt das Abschalten dieses defekten Injektors zu einem größeren Lambda-Sprung Δλ als für die nicht defekten Injektoren der Zylinder Z4 und Z5. Wie man Fig. 2 entnehmen kann, liegen die Lambda-Sprünge beim Abschalten der Injektoren der Zylinder Z4 und Z5 im Bereich von 0,2, wohingegen der Lambda-Sprung beim Abschalten des Injektors des Zylinders Z6 wesentlich größer ist und bei 0,45 liegt.

In der hier beschriebenen Ausführungsform wird nunmehr zur Detektion des defekten Injektors des Zylinders Z6 der prozentuale Wert des Lambda-Sprungs beim Abschalten des Zylinders Z6 in Bezug auf den kleinsten Lambda-Sprung der Brennkammergruppe G2 ermittelt. Der kleinste Lambda-Sprung tritt beim Abschalten des Zylinders Z4 auf. Mit anderen Worten wird der Lambda-Sprung beim Abschalten des Injektors des Zylinders Z6 in das Verhältnis zum Lambda-Sprung beim Abschalten des Zylinders Z4 gesetzt. Hieraus ergibt sich ein Relativwert größer 1, der einem prozentualen Wert von mehr als 100% entspricht. Dabei ist im Rahmen des Fehlerkriteriums ein Grenzwert festgelegt, der einem prozentualen Wert von mehr als 100% entspricht. Wird dieser Grenzwert durch den prozentualen Wert des Lambda-Sprungs überschritten, wird der Injektor mit diesem Lambda-Sprung als defekt detektiert. In dem Ausführungsbeispiel der Fig. 1 liegt der Grenzwert bei etwa 1,1 und damit 110%. Dieser Grenzwert wird klar von dem prozentualen Wert des Lambda-Sprungs des Injektors des Zylinders Z6 überschritten, der bei etwa 0,45/0,2 = 225% liegt. Demgegenüber bleibt der prozentuale Wert des Lambda-Sprungs des Injektors des Zylinders Z5 unterhalb des Grenzwerts. Somit wird in der Tat nur der defekte, zu fett laufende Injektor des Zylinders Z6 detektiert.

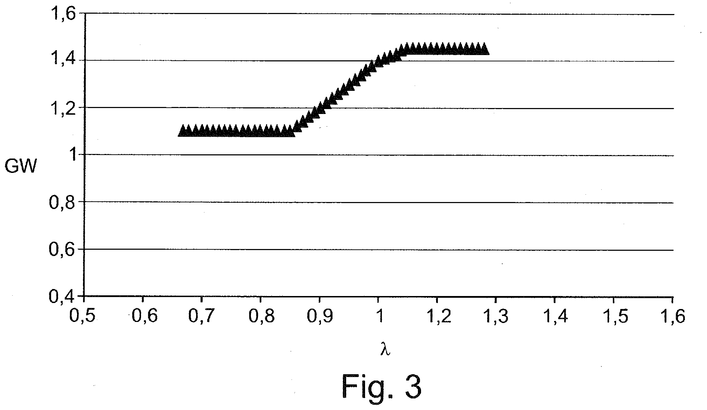

In einer weiteren bevorzugten Ausführungsform besteht ferner die Möglichkeit, dass der soeben beschriebene Grenzwert von dem Lambda-Wert abhängig gemacht wird, der für die jeweilige Brennkammergruppe im angeschalteten Zustand aller Injektoren ermittelt wird, d.h. in den entsprechenden Zeitintervallen G1 und G2 der Fig. 2. Beispielhaft ist eine mögliche Abhängigkeit des Grenzwerts von dem Lambda-Wert in dem Diagramm der Fig. 3 angedeutet. Entlang der Abszisse sind dabei die Lambda-Werte A wiedergegeben und entlang der Ordinate die Grenzwerte GW. Der Zusammenhang zwischen den Lambda-Werten und den Grenzwerten GW ist dabei monoton steigend, d.h. die Grenzwerte nehmen bei steigenden Werten von A niemals ab, sondern bleiben konstant und nehmen in einem Teilintervall auch zu. Dieses Teilintervall liegt in dem Beispiel der Fig. 3 zwischen Lambda-Werten von etwa 0,85 und 1,05. Durch die Zunahme des Grenzwerts GW bei steigenden Lambda-Werten wird das Testverfahren bei größeren Lambda-Werten und damit magereren Gemischen fehlertoleranter. Man berücksichtigt hierbei, dass im Normalbetrieb bei angeschalteter Gemischregelung ein magereres Gemisch automatisch zu dessen Anfettung führt, so dass mit geringerer Wahrscheinlichkeit Zündaussetzer auftreten, als dies bei einem fetten Gemisch der Fall ist, das im Rahmen der Gemischregelung abgemagert wird.

Da das Verfahren im Kaltbetrieb durchgeführt wird, können hierdurch Defekte von Injektoren detektiert werden, welche nur im Kaltbetrieb auftreten, insbesondere das eingangs erläuterte Fehlverhalten des Thermokompensators. Nichtsdestotrotz werden mit dem Verfahren auch defekte Injektoren erkannt, welche sowohl im Kaltbetrieb als auch im Heißbetrieb des Motors zu fett laufen, weil sie beispielsweise kontinuierliche Undichtigkeiten zusätzlich zu ihren abgesetzten Kraftstoffmassen aufweisen.

Die im Rahmen des Testverfahrens erfassten defekten Injektoren werden dem Bediener über eine entsprechende Benutzerschnittstelle des Motortestgeräts angezeigt. Dieser kann dann den Austausch der Injektoren veranlassen. Wie bereits erwähnt, kann das Verfahren gegebenenfalls auch bei warmem Motor durchgeführt werden. In diesem Fall können jedoch solche defekte Injektoren nicht detektiert werden, welche nur im Kaltbetrieb nicht ordnungsgemäß funktionieren. Wird das Verfahren in einer Motorwerkstatt durchgeführt, wird üblicherweise der Motortest zunächst bei warmem Motor durchgeführt, da der Verbrennungsmotor bei Anlieferung des Fahrzeugs durch den Kunden in der Regel schon länger gelaufen ist und somit als Heißzustand zu klassifizieren ist. Die dabei detektierten defekten Injektoren können sofort ausgetauscht werden. Zu einem späteren Zeitpunkt nach Abkühlung des Verbrennungsmotors wird das Verfahren nochmals durch die Werkstatt im Kaltbetrieb des Motors durchgeführt. Werden dabei weitere defekte Injektoren detektiert, werden auch diese ausgetauscht.

Die im Vorangegangenen beschriebene Ausführungsform des erfindungsgemäßen Verfahrens weist eine Reihe von Vorteilen auf. Insbesondere wird ein sicherer und objektivierter Test geschaffen, mit dem überprüft werden kann, ob Injektoren in einem Verbrennungsmotor eine Fehlfunktion aufweisen. Die Injektoren müssen hierzu nicht aus dem Motor ausgebaut werden, sondern können während der Motorlaufzeit begutachtet werden. Es ist somit nicht mehr erforderlich, im Falle von Fehlfunktionen des Verbrennungsmotors, welche von defekten Injektoren verursacht sein könnten, die Injektoren auf Verdacht zu tauschen. Vielmehr kann durch das erfindungsgemäße Verfahren zuverlässig festgestellt werden, ob Fehlfunktionen eines Motors tatsächlich von defekten Injektoren verursacht werden, so dass ein Tausch nur bei Defekt durchgeführt werden muss und hierdurch Wiederholreparaturen vermieden werden und Gewährleistungskosten eingespart werden.

**Bezugszeichen**
- S1, S2, ..., S7: Schritte
- G1, G2: Brennkammergruppen
- Z1, Z2, ..., Z6: Zylinder
- L1, L2: Linien
- t: Zeit
- λ: Lambda-Wert
- Δλ: Lambda-Sprung
- GW: Grenzwert

## Patentansprüche

1. Verfahren zur Erkennung von defekten Einspritzdüsen zur Zuführung von Kraftstoff in die Brennkammern (Z1, Z2, ..., Z6) eines Verbrennungsmotors, insbesondere in einem Kraftfahrzeug, bei dem der Verbrennungsmotor im Leerlauf mit einer gegenüber dem Leerlaufnormalbetrieb erhöhten Leerlaufdrehzahl betrieben wird, wobei die Gemischregelung des Verbrennungsmotors deaktiviert ist, über welche das Gemisch aus Kraftstoff und Luft in den jeweiligen Brennkammern (Z1, Z2, ..., Z6) im Normalbetrieb des Verbrennungsmotors basierend auf einem Kennwert (λ) eingestellt wird, der vom Verhältnis von Luft zu Kraftstoff im Gemisch abhängt und der für eine oder mehrere Einspritzgruppen (G1, G2) aus mehreren Einspritzdüsen des Verbrennungsmotors jeweils für alle Einspritzdüsen der Einspritzgruppe (G1, G2) gemeinsam gemessen wird, wobei für zumindest einen Teil der Einspritzgruppen (G1, G2) bei aktivierter Messung des Kennwerts (λ) jeweils folgende Schritte durchgeführt werden:
a) jede Einspritzdüse der jeweiligen Einspritzgruppe (G1, G2) wird selektiv abgeschaltet und die Veränderung (Δλ) des Kennwerts (λ) bei Abschaltung der jeweiligen Einspritzdüse wird erfasst (S5);
b) ein Fehlerkriterium wird überprüft, welches dann erfüllt ist, wenn die Veränderung (Δλ) des Kennwerts (λ) für die jeweilige abgeschaltete Einspritzdüse ein vorbestimmtes Maß überschreitet oder unterschreitet (S6), wobei das Fehlerkriterium dann erfüllt ist, wenn die Veränderung (Δλ) des Kennwerts (λ) für die jeweilige abgeschaltete Einspritzdüse relativ zu den Veränderungen des Kennwerts (λ) bei der Abschaltung der anderen Einspritzdüsen der jeweiligen Einspritzgruppe (G1, G2) ein vorbestimmtes Maß überschreitet oder unterschreitet;
c) im Falle der Erfüllung des Fehlerkriteriums wird ein Defekt der jeweiligen Einspritzdüse detektiert (S7).

2. Verfahren nach Anspruch 1, **dadurch gekennzeichnet, dass** das Verfahren für Einspritzdüsen in der Form von Hochdruckinjektoren, insbesondere von Piezoinjektoren, in einem direkt einspritzenden Verbrennungsmotor durchgeführt wird.

3. Verfahren nach Anspruch 1 oder 2, **dadurch gekennzeichnet, dass** die erhöhte Leerlaufdrehzahl bei 1000 Umdrehungen pro Minute oder mehr liegt, vorzugsweise bei 1150 Umdrehungen pro Minute oder mehr.

4. Verfahren nach einem der vorhergehenden Ansprüche, **dadurch gekennzeichnet, dass** der Kennwert (λ) der Lambda-Wert ist, der das Verhältnis von Luft zu Kraftstoff des Gemischs im Vergleich zu einem stöchiometrischen Gemisch repräsentiert.

5. Verfahren nach einem der vorhergehende Ansprüche, **dadurch gekennzeichnet, dass** das vorbestimmte Maß durch einen Grenzwert (GW) oberhalb von 100% gegeben ist und das Fehlerkriterium dann erfüllt ist, wenn der prozentuale Wert der Veränderung des Kennwerts (λ) für die jeweilige abgeschaltete Einspritzdüse in Bezug auf die aufgetretene geringste Veränderung (Δλ) des Kennwerts (λ) bei der Abschaltung der jeweiligen Einspritzdüsen der jeweiligen Einspritzgruppe (G1, G2) den Grenzwert überschreitet oder dass das vorbestimmte Maß durch einen Grenzwert (GW) unterhalb von 100% gegeben ist und das Fehlerkriterium dann erfüllt ist, wenn der prozentuale Wert der Veränderung des Kennwerts (λ) für die jeweilige abgeschaltete Einspritzdüse in Bezug auf die aufgetretene größte Veränderung (Δλ) des Kennwerts (λ) bei der Abschaltung der jeweiligen Einspritzdüsen der jeweiligen Einspritzgruppe (G1, G2) den Grenzwert unterschreitet.

6. Verfahren nach einem der vorhergehende Ansprüche, **dadurch gekennzeichnet, dass** das vorbestimmte Maß durch einen Schwellwert gegeben ist und das Fehlerkriterium dann erfüllt ist, wenn die Veränderung (Δλ) des Kennwerts (λ) für die jeweilige abgeschaltete Einspritzdüse abzüglich der Veränderungen des Kennwerts (λ) bei der Abschaltung der anderen Einspritzdüsen der jeweiligen Einspritzgruppe (G1, G2) den Schwellwert überschreitet oder unterschreitet.

7. Verfahren nach Anspruch 5 oder 6, **dadurch gekennzeichnet, dass** der Grenzwert (GW) oder der Schwellwert von einem gemessenen Kennwert (λ) bei allen angeschalteten Einspritzdüsen der jeweiligen Einspritzgruppe (G1, G2) abhängt, wobei vorzugsweise der Grenzwert (GW) oder der Schwellwert bei steigenden gemessenen Kennwerten (λ) monoton ansteigt und dabei zumindest in einem Teilintervall der gemessenen Kennwerte auch zunimmt.

8. Verfahren nach einem der vorhergehenden Ansprüche, **dadurch gekennzeichnet, dass** das Verfahren im Kaltbetrieb der Einspritzdüsen durchgeführt wird.

9. Verfahren nach Anspruch 8, **dadurch gekennzeichnet, dass** im Falle, dass ein Kaltbetrieb während der Durchführung des Verfahrens nicht durchgehend vorliegt, das Ergebnis des Verfahrens oder Teilergebnisse des Verfahrens als ungültig eingestuft wird.

10. Verfahren nach Anspruch 8 oder 9, **dadurch gekennzeichnet, dass** ein Kaltbetrieb der Einspritzdüsen dann festgestellt wird, wenn eine Einspritzdüsentemperatur unterhalb einer vorbestimmten Schwelle, insbesondere unter 50 °C, liegt, wobei die Einspritzdüsentemperatur vorzugsweise aus der Temperatur des Verbrennungsmotors zu Beginn des Verfahrens und der Zeitspanne bis zur Beendigung des Verfahrens geschätzt wird.

11. Verfahren nach einem der vorhergehenden Ansprüche, **dadurch gekennzeichnet, dass** das Verfahren im Heißbetrieb der Einspritzdüsen durchgeführt wird, wobei ein Heißbetrieb insbesondere dann festgestellt wird, wenn
- kein Kaltbetrieb festgestellt wird; und/oder
- wenn die Temperatur des Kühlmittels des Verbrennungsmotors einen vorbestimmten Wert überschreitet und/oder die Fahrzeit eines Kraftfahrzeugs, in dem der Verbrennungsmotor verbaut ist, unmittelbar vor Beginn des Verfahrens eine vorbestimmte Zeitspanne überschreitet.

12. Motortesteinrichtung zur Erkennung von defekten Einspritzdüsen zur Zuführung von Kraftstoff in die Brennkammern eines Verbrennungsmotors, insbesondere in einem Kraftfahrzeug, wobei die Motortesteinrichtung zur Durchführung eines Verfahrens eingerichtet ist, bei dem der Verbrennungsmotor im Leerlauf mit einer gegenüber dem Leerlaufnormalbetrieb erhöhten Leerlaufdrehzahl betrieben wird, wobei die Gemischregelung des Verbrennungsmotors deaktiviert ist, über welche das Gemisch aus Kraftstoff und Luft in den jeweiligen Brennkammern (Z1, Z2, ..., Z6) im Normalbetrieb des Verbrennungsmotors basierend auf einem Kennwert (λ) eingestellt wird, der vom Verhältnis von Luft zu Kraftstoff im Gemisch abhängt und der für eine oder mehrere Einspritzgruppen (G1, G2) aus mehreren Einspritzdüsen des Verbrennungsmotors jeweils für alle Einspritzdüsen der Einspritzgruppe (G1, G2) gemeinsam gemessen wird, wobei für zumindest einen Teil der Einspritzgruppen (G1, G2) bei aktivierter Messung des Kennwerts (λ) jeweils folgende Schritte durchgeführt werden:
a) jede Einspritzdüse der jeweiligen Einspritzgruppe (G1, G2) wird selektiv abgeschaltet und die Veränderung (Δλ) des Kennwerts (λ) bei Abschaltung der jeweiligen Einspritzdüse wird erfasst (S5);
b) ein Fehlerkriterium wird überprüft, welches dann erfüllt ist, wenn die Veränderung (Δλ) des Kennwerts (λ) für die jeweilige abgeschaltete Einspritzdüse ein vorbestimmtes Maß überschreitet oder unterschreitet (S6), wobei das Fehlerkriterium dann erfüllt ist, wenn die Veränderung (Δλ) des Kennwerts (λ) für die jeweilige abgeschaltete Einspritzdüse relativ zu den Veränderungen des Kennwerts (λ) bei der Abschaltung der anderen Einspritzdüsen der jeweiligen Einspritzgruppe (G1, G2) ein vorbestimmtes Maß überschreitet oder unterschreitet;
c) im Falle der Erfüllung des Fehlerkriteriums wird ein Defekt der jeweiligen Einspritzdüse detektiert (S7).

13. Motortesteinrichtung nach Anspruch 12, **dadurch gekennzeichnet, dass** die Motortesteinrichtung zur Durchführung eines Verfahrens nach einem der Ansprüche 2 bis 11 eingerichtet ist.

14. Kraftfahrzeug mit Verbrennungsmotor und Einspritzdüsen zur Zuführung von Kraftstoff in die Brennkammern (Z1, Z2, ..., Z6) des Verbrennungsmotors, **dadurch gekennzeichnet, dass** das Kraftfahrzeug eine Motortesteinrichtung nach Anspruch 12 oder 13 umfasst.

## Claims

1. A method for recognising defective injectors for supplying fuel into the combustion chambers (Z1, Z2, ..., Z6) of an internal combustion engine, especially in a motor vehicle, in which the internal combustion engine is operated in idling mode with an idling speed which is increased compared with normal idling mode, wherein the mixture control of the internal combustion engine is deactivated, by means of which the mixture of fuel and air in the respective combustion chambers (Z1, Z2, ..., Z6) in normal operation of the internal combustion engine is set based on a characteristic value (A) which depends on the ratio of air to fuel in the mixture and which is measured jointly for one or more injection groups (G1, G2) comprising a plurality of injectors of the internal combustion engine in each case for all the injectors of the injection group (G1, G2), wherein for at least some of the injection groups (G1, G2) when measurement of the characteristic value (λ) is activated in each case the following steps are carried out:
a) each injector of the respective injection group (G1, G2) is switched off selectively and the change (Δλ) in the characteristic value (A) upon switching off the respective injector is detected (S5);
b) a fault criterion is checked which is satisfied when the change (Δλ) in the characteristic value (A) for the respective injector which is switched off exceeds or drops below a predetermined amount (S6), wherein the fault criterion is satisfied when the change (Δλ) in the characteristic value (A) for the respective injector which is switched off, relative to the changes in the characteristic value (A), upon the switching-off of the other injectors of the respective injection group (G1, G2) exceeds or drops below a predetermined amount;
c) in the event of the fault criterion being satisfied, a defect of the respective injector is detected (S7).

2. A method according to Claim 1, **characterised in that** the method is carried out for injectors in the form of high-pressure injectors, especially of piezoinjectors, in a direct injection internal combustion engine.

3. A method according to Claim 1 or Claim 2, **characterised in that** the increased idling speed is 1000 revolutions per minute or more, preferably 1150 revolutions per minute or more.

4. A method according to one of the preceding claims, **characterised in that** the characteristic value (A) is the lambda value, which represents the ratio of air to fuel of the mixture compared with a stoichiometric mixture.

5. A method according to one of the preceding claims, **characterised in that** the predetermined amount is given by a limit value (GW) above 100% and the fault criterion is satisfied when the percentage value of the change in the characteristic value (A) for the respective injector which is switched off in relation to the smallest change (Δλ) in the characteristic value (λ) which has occurred upon the switching-off of the respective injectors of the respective injection group (G1, G2) exceeds the limit value, or **in that** the predetermined amount is given by a limit value (GW) below 100% and the fault criterion is satisfied when the percentage value of the change in the characteristic value (A) for the respective injector which is switched off in relation to the greatest change (Δλ) in the characteristic value (A) which has occurred upon the switching-off of the respective injectors of the respective injection group (G1, G2) drops below the limit value.

6. A method according to one of the preceding claims, **characterised in that** the predetermined amount is given by a threshold value and the fault criterion is satisfied when the change (Δλ) in the characteristic value (λ) for the respective injector which is switched off minus the changes in the characteristic value (λ) upon the switching-off of the other injectors of the respective injection group (G1, G2) exceeds or drops below the threshold value.

7. A method according to Claim 5 or Claim 6, **characterised in that** the limit value (GW) or the threshold value depends on a measured characteristic value (λ) when all the injectors of the respective injection group (G1, G2) are switched on, with preferably the limit value (GW) or the threshold value rising monotonically as the measured characteristic values (A) rise, and in so doing also increasing at least in a partial interval of the measured characteristic values.

8. A method according to one of the preceding claims, **characterised in that** the method is carried out during cold operation of the injectors.

9. A method according to Claim 8, **characterised in that** in the event that cold operation is not continuously present during carrying-out of the method, the result of the method or partial results of the method is/are classified as invalid.

10. A method according to Claim 8 or Claim 9, **characterised in that** cold operation of the injectors is detected when an injector temperature is below a predetermined threshold, especially below 50°C, the injector temperature preferably being estimated from the temperature of the internal combustion engine at the start of the method and the time period up to the termination of the method.

11. A method according to one of the preceding claims, **characterised in that** the method is carried out during hot operation of the injectors, with hot operation being detected especially when
- no cold operation is detected; and/or
- when the temperature of the coolant of the internal combustion engine exceeds a predetermined value and/or the travel time of a motor vehicle in which the internal combustion engine is installed exceeds a predetermined time period directly prior to the start of the method.

12. An engine testing device for recognising defective injectors for supplying fuel into the combustion chambers of an internal combustion engine, especially in a motor vehicle, wherein the engine testing device is set up to carry out a method in which the internal combustion engine is operated in idling mode with an idling speed which is increased compared with normal idling operation, wherein the mixture control of the internal combustion engine is deactivated, by means of which the mixture of fuel and air in the respective combustion chambers (Z1, Z2, ..., Z6) in normal operation of the internal combustion engine is set based on a characteristic value (A) which depends on the ratio of air to fuel in the mixture and which is measured jointly for one or more injection groups (G1, G2) consisting of a plurality of injectors of the internal combustion engine in each case for all the injectors of the injection group (G1, G2), wherein for at least some of the injection groups (G1, G2) when measurement of the characteristic value (λ) is activated in each case the following steps are carried out:
a) each injector of the respective injection group (G1, G2) is switched off selectively and the change (Δλ) in the characteristic value (λ) upon switching off the respective injector is detected (S5);
b) a fault criterion is checked which is satisfied when the change (Δλ) in the characteristic value (λ) for the respective injector which is switched off exceeds or drops below a predetermined amount (S6), wherein the fault criterion is satisfied when the change (Δλ) in the characteristic value (A) for the respective injector which is switched off, relative to the changes in the characteristic value (A), upon the switching-off of the other injectors of the respective injection group (G1, G2) exceeds or drops below a predetermined amount;
c) in the event of the fault criterion being satisfied, a defect of the respective injector is detected (S7).

13. An engine testing device according to Claim 12, **characterised in that** the engine testing device is set up to carry out a method according to one of Claims 2 to 11.

14. A motor vehicle with internal combustion engine and injectors for supplying fuel into the combustion chambers (Z1, Z2, ..., Z6) of the internal combustion engine, **characterised in that** the motor vehicle comprises an engine testing device according to Claim 12 or Claim 13.

## Revendications

1. Procédé d'identification d'injecteurs défectueux pour alimenter en carburant les chambres de combustion (Z1, Z2, ..., Z6) d'un moteur à combustion, notamment dans un véhicule automobile, selon lequel on fait fonctionner le moteur à combustion au ralenti avec une vitesse de rotation de ralenti supérieure à celle du ralenti normal,
procédé selon lequel
on neutralise la régulation du mélange du moteur à combustion qui règle le mélange de carburant et d'air dans les chambres de combustion respectives (Z1, Z2, ..., Z6) en mode de fonctionnement normal du moteur à combustion en se fondant sur une valeur caractéristique (À) dépendant du rapport entre l'air et le carburant dans le mélange et qui est mesurée en commun pour un ou plusieurs groupes d'injections (G1, G2) formés de plusieurs injecteurs du moteur à combustion, chaque fois pour tous les injecteurs du groupe d'injection (G1, G2) et pour au moins une partie des groupes d'injection (G1, G2) pour une mesure activée de la valeur caractéristique (À) on effectue les étapes suivantes :
a) on coupe sélectivement chaque injecteur du groupe d'injection (G1, G2) respectif et on saisit la variation (Δλ) de la valeur caractéristique (À) à la coupure de l'injecteur respectif (S5) ;
b) on vérifie un critère de défaut qui est rempli si la variation (Δλ) de la valeur caractéristique (À) de l'injecteur respectif coupé dépasse vers le haut ou vers le bas une mesure prédéfinie (S6),
le critère de défaut étant rempli si la variation (Δλ) de la valeur caractéristique (λ) de l'injecteur respectif, coupé, dépasse vers le haut ou vers le bas une mesure prédéfinie par rapport aux variations de la valeur caractéristique (λ) lors de la coupure des autres injecteurs du groupe d'injection (G1, G2) respectif ;
c) si le critère de défaut est rempli, on constate (S7) un défaut de l'injecteur respectif.

2. Procédé selon la revendication 1,
**caractérisé en ce que**
le procédé est appliqué à des injecteurs sous la forme d'injecteurs haute pression, notamment d'injecteurs piézoélectriques à injection directe dans le moteur à combustion.

3. Procédé selon la revendication 1 ou 2,
**caractérisé en ce que**
la vitesse de ralenti augmentée se situe à environ 1000 tours/mn ou plus et de préférence à 1150 tours/mn ou plus.

4. Procédé selon l'une des revendications précédentes,
**caractérisé en ce que**
la valeur caractéristique (λ) est la valeur lambda qui représente le rapport entre l'air et le carburant du mélange par comparaison à un mélange stoechiométrique.

5. Procédé selon l'une des revendications précédentes,
**caractérisé en ce que**
la mesure prédéfinie est donnée par une valeur limite (GW) supérieure à 100 % et le critère de défaut est rempli si la valeur en pourcentage de la variation de la valeur caractéristique (λ) correspondant à l'injecteur respectif coupé par rapport à la variation (Δλ) la plus faible produite pour la valeur caractéristique (λ) à la coupure des injecteurs respectifs du groupe d'injection correspondant (G1, G2) dépasse la valeur limite ou que la mesure prédéfinie est fixée à une valeur limite (GW) en dessous de 100 % et le critère de défaut est rempli si la valeur en pourcentage de la variation de la valeur caractéristique (λ) de l'injecteur respectif coupé par rapport à la plus grande variation (Δλ) de la valeur caractéristique (λ) produite lors de la coupure des injecteurs respectifs du groupe d'injection correspondant (G1, G2) dépasse vers le bas, la valeur limite.

6. Procédé selon l'une des revendications précédentes,
**caractérisé en ce que**
la mesure prédéfinie est donnée par un seuil et le critère de défaut est rempli si la variation (Δλ) de la valeur caractéristique (λ) de l'injecteur respectif, coupé, diminuée de la variation de la valeur caractéristique (λ) à la coupure des autres injecteurs du groupe d'injection (G1, G2) respectif dépasse le seuil vers le haut ou vers le bas.

7. Procédé selon la revendication 5 ou 6,
**caractérisé en ce que**
la valeur limite (GW) ou le seuil dépendant d'une valeur caractéristique (À) mesurée pour tous les injecteurs branchés du groupe d'injection (G1, G2) respectif, et de préférence la valeur limite (GW) ou le seuil augmentent de façon monotone pour les valeurs caractéristiques (λ) croissantes et ainsi ils augmentent également au moins dans un intervalle partiel des valeurs caractéristiques mesurées.

8. Procédé selon l'une des revendications précédentes,
**caractérisé en ce qu'**
on effectue le procédé lorsque les injecteurs fonctionnent à froid.

9. Procédé selon la revendication 8,
**caractérisé en ce qu'**
au cas où on ne peut appliquer un fonctionnement à froid pour la mise en oeuvre du procédé, le résultat du procédé ou les résultats partiels du procédé sont considérés comme non valables.

10. Procédé selon la revendication 8 ou 9,
**caractérisé en ce qu'**
on constate le fonctionnement à froid des injecteurs, si la température d'injection est inférieure à un seuil prédéfini, notamment inférieure à 50°C, la température d'injecteur étant de préférence évaluée à partir de la température du moteur à combustion au début du procédé et sur une durée allant jusqu'à la fin du procédé.

11. Procédé selon l'une des revendications précédentes,
**caractérisé en ce qu'**
on effectue le procédé avec des injecteurs fonctionnant à chaud et on constate alors notamment le fonctionnement à chaud si :
- aucun fonctionnement à froid n'a été constaté, et/ou
- si la température de l'agent réfrigérant du moteur à combustion dépasse une valeur prédéfinie et/ou la durée de circulation du véhicule équipé du moteur à combustion, directement avant le début du procédé, dépasse une durée prédéfinie.

12. Installation d'essai de moteur pour identifier des injecteurs défectueux pour l'alimentation en carburant des chambres de combustion d'un moteur à combustion, notamment équipant un véhicule automobile, l'installation d'essai de moteur étant conçue pour exécuter un procédé selon lequel on fait fonctionner le moteur à combustion, au ralenti, avec une vitesse de rotation de ralenti supérieure à celle du mode de fonctionnement au ralenti normal,
cette régulation du mélange du moteur à combustion étant neutralisée, régulation qui règle le mélange de carburant et d'air dans les chambres de combustion respectives (Z1, Z2, ..., Z6) en mode de fonctionnement normal du moteur à combustion se fondant sur une valeur caractéristique (λ) dépendant du rapport entre l'air et le carburant dans le mélange et qui est mesurée en commun pour un ou plusieurs groupes d'injection (G1, G2) composés de plusieurs injecteurs du moteur à combustion chaque fois pour tous les injecteurs du groupe d'injection (G1, G2), selon lequel on effectue les étapes suivantes pour au moins une partie des groupes d'injection (G1, G2) lors de la mesure activée de la valeur caractéristique (λ) :
a) on coupe sélectivement chaque injecteur du groupe d'injection (G1, G2) respectif et on saisit la variation (Δλ) de la valeur caractéristique (λ) en coupant l'injecteur respectif (S5) ;
b) on vérifie un critère de défaut qui est rempli si la variation (Δλ) de la valeur caractéristique (λ) de l'injecteur respectif coupé, dépasse vers le haut ou vers le bas (S6) une mesure prédéfinie,
le critère de défaut étant alors rempli si la variation (Δλ) de la valeur caractéristique (λ) de l'injecteur respectif, coupé, dépasse vers le haut ou vers le bas une mesure prédéfinie par rapport aux variations de la valeur caractéristique (λ) lors de la coupure des autres injecteurs du groupe d'injection (G1, G2) respectif ;
c) si le critère de défaut est rempli, on constate (S7) un défaut de l'injecteur respectif.

13. Installation d'essai de moteur selon la revendication 12,
**caractérisée en ce que**
l'installation d'essai de moteur est conçue pour exécuter un procédé selon l'une des revendications 2 à 11.

14. Véhicule automobile équipé d'un moteur thermique et de buses d'injection pour fournir le carburant aux chambres de combustion (Z1, Z2, ..., Z6) du moteur à combustion,
**caractérisé en ce que**
le véhicule automobile est équipé d'une installation d'essai de moteur selon la revendication 12 ou la revendication 13.
